# EUROPEAN PATENT SPECIFICATION

(11) **EP 4 230 583 B1**
(45) Date of publication and mention of the grant of the patent: **04.11.2026**
(21) Application number: 23182535.7
(22) Date of filing: 23.02.2016
(51) Int. Cl.: C01F 5/14, B01D 53/73, C01F 5/22, B01D 53/14, B01D 53/96

(54) **CARBON DIOXIDE SEQUESTRATION WITH MAGNESIUM HYDROXIDE AND REGENERATION OF MAGNESIUM HYDROXIDE**
KOHLENDIOXIDSEQUESTRIERUNG MIT MAGNESIUMHYDROXID UND REGENERATION VON MAGNESIUMHYDROXID
SÉQUESTRATION DE DIOXYDE DE CARBONE AVEC DE L'HYDROXYDE DE MAGNÉSIUM ET RÉGÉNÉRATION DE L'HYDROXYDE DE MAGNÉSIUM

(30) Priority: 23.02.2015 US 201562119633 P
(43) Date of publication of application: 23.08.2023
(62) Document number(s) of the earlier application(s) in accordance with Art. 76 EPC: 16756203.2 / 3 261 991
(73) Proprietor: Carbonfree Chemicals Holdings, LLC, San Antonio TX 78217 (US)
(72) Inventor: JONES, Joe David, San Antonio, 78217 (US); YABLONSKY, Al, San Antonio, 78217 (US)
(74) Representative: SONN Patentanwälte GmbH & Co KG

(56) References cited:
- US-A- 2 013 334
- US-A1- 2013 202 516
- OHTA: "Solar-Hydrogen Energy Systems", 1 January 1979 (1979-01-01), pages 104, XP055497842, Retrieved from the Internet <URL:https://books.google.com/books?id=KaTpAgAAQBAJ&pg=PA104#v=onepage&q&f=false> [retrieved on 20180807]
- K BARIS ET AL: "The Assesment for CO2 Sequestration Potential by Magnesium silicate Minerals in Turkey: Cases of Orhaneli-Bursa and Divrigi-Sivas Regions", ENERGY EXPLORATION & EXPLOITATION, 1 October 2008 (2008-10-01), London, England, pages 293 - 309, XP055520528, Retrieved from the Internet <URL:http://journals.sagepub.com/doi/pdf/10.1260/014459808787945362> DOI: 10.1260/014459808787945362

## Description

### CROSS REFERENCE TO RELATED APPLICATIONS

This application claims the benefit of priority to U.S. Provisional Patent Application Serial No. 62/119,633, filed February 23, 2015.

### A. Field of the Invention

The field of the invention generally concerns methods related to carbon sequestration with magnesium hydroxide and for regeneration of magnesium hydroxide from magnesium halide.

### B. Background

Considerable domestic and international concern has been increasingly focused on the emission of CO₂ into the air. In particular, attention has been focused on the effect of this gas on the retention of solar heat in the atmosphere, producing the "greenhouse effect." Although there is some debate regarding the magnitude of the effect, all would agree there is a benefit to removing CO₂ (and other chemicals) from point-emission sources, especially if the cost for doing so were sufficiently small.

Despite years of development, the task of creating a commercially-viable, environmentally-sensitive process for removing carbon dioxide from an emission source has proven to be a difficult. The methodologies to date have not been altogether satisfactory in this regard, and a significant need exists for the techniques described and claimed in this disclosure.

US 2013/0202516 A1 relates to an energy efficient carbon dioxide sequestration processes whereby calcium silicate minerals and CO₂ are converted into limestone and sand using a two-salt thermolytic process that allows for the cycling of heat and chemicals from one step to another.

### SUMMARY

The present invention relates to a method for producing magnesium hydroxide from magnesium chloride-containing material comprising: a first stage comprising the steps of introducing said material into a first reactor, passing a steam mixture into the first reactor with the magnesium chloride-containing material at the approximate temperature of 250 to 400 C, to form magnesium hydroxychloride and HCl, a second stage of conveying the magnesium hydroxychloride into a second reactor, introducing therewith steam to form magnesium hydroxide and HCl, where the magnesium chloride-containing material comprises a water to magnesium chloride ratio of about 2: 1, reacting the magnesium hydroxide with carbon dioxide in the first absorption reactor to form magnesium carbonate and water, and reacting the magnesium carbonate with calcium chloride in the second absorption reactor to form calcium carbonate and magnesium chloride. In some embodiments, a portion of a steam mixture exiting the second reactor is the steam mixture introduced into the first reactor. At least a portion of the HCl exits the second reactor in the steam mixture that then passes through the first reactor. In some embodiments, the magnesium chloride-containing material substantially comprises magnesium chloride dihydrate. In some embodiments, waste heat is utilized to provide the heat necessary to form the Mg(OH)₂.

The terms "a" and "an" are defined as one or more unless this disclosure explicitly requires otherwise.

The terms "substantially," "approximately" and "about" are defined as being largely but not necessarily wholly what is specified (and include wholly what is specified) as understood by one of ordinary skill in the art. In any disclosed embodiment, the term "substantially," "approximately," or "about" may be substituted with "within [a percentage] of" what is specified, where the percentage includes 0.1, 1, 5, and 10 percent.

The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, any of the present devices, systems, and methods that "comprises," "has," "includes" or "contains" one or more elements possesses those one or more elements, but is not limited to possessing only those one or more elements. Likewise, an element of a device, system, or method that "comprises," "has," "includes" or "contains" one or more features possesses those one or more features, but is not limited to possessing only those one or more features. Additionally, terms such as "first" and "second" are used only to differentiate structures or features, and not to limit the different structures or features to a particular order.

Furthermore, a structure that is capable performing a function or that is configured in a certain way is capable or configured in at least that way, but may also be capable or configured in ways that are not listed.

The feature or features of one embodiment may be applied to other embodiments, even though not described or illustrated, unless expressly prohibited by this disclosure or the nature of the embodiments.

Any of the present methods can consist of or consist essentially of-rather than comprise/include/contain/have-any of the described elements and/or features and/or steps. Thus, in any of the claims, the term "consisting of" or "consisting essentially of" can be substituted for any of the open-ended linking verbs recited above, in order to change the scope of a given claim from what it would otherwise be using the open-ended linking verb.

Details associated with the embodiments described above and others are presented below.

### BRIEF DESCRIPTION OF THE DRAWINGS

The following drawings illustrate by way of example and not limitation. For the sake of brevity and clarity, every feature of a given structure may not be labeled in every figure in which that structure appears. Identical reference numbers do not necessarily indicate an identical structure. Rather, the same reference number may be used to indicate a similar feature or a feature with similar functionality, as may non-identical reference numbers.
**FIG. 1** is a simplified process flow diagram which does not fall under the scope of the present invention.
**FIG. 2** is a simplified process flow diagram which also does not fall under the scope of the present invention.
**FIG. 3** is a simplified process flow diagram according to some embodiments of the processes provided herein.

### DETAILED DESCRIPTION

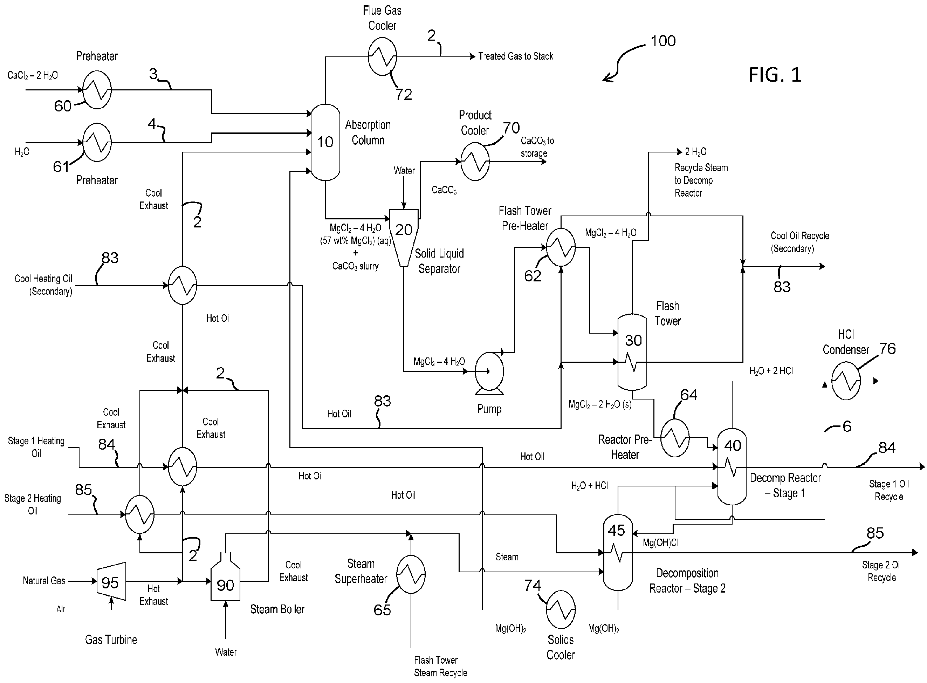

Referring to **FIG. 1****,** shown therein and designated by the reference numeral 100 is a first embodiment of a system which does not fall under the scope of the present invention. The system is configured to remove CO₂ from a gaseous stream using Mg(OH)₂ and to regenerate the Mg(OH)₂. System 100 is configured to absorb carbon dioxide from a gas stream 2 and regenerate at least one of the reactants, e.g., magnesium hydroxide, used in the absorption process. System 100 comprises an absorption reactor 10 configured to absorb CO₂ from a gaseous stream; a solid-liquid separator 20 configured to separate carbonate solids from aqueous magnesium chloride; a dryer 30 configured to remove a portion of water from the aqueous magnesium chloride forming magnesium chloride solids; a first decomposition reactor 40 configured to convert the magnesium chloride to magnesium hydroxychloride, and a second decomposition reactor 45 configured to convert the magnesium hydroxychloride to magnesium hydroxide. Also illustrated in system 100 is a plurality of heaters and heating fluid systems to elevate the temperatures of the different reactants.

Prior to treating the carbon dioxide containing gas stream 2, the temperature of gas stream 2 may be lowered. In the instance of a hot gas stream, (e.g., gas turbine exhaust), gas stream 2 can provide process heat that is transferred to different units in the system. In some embodiments, the process heat can be transferred to one or more of boilers, pre-heaters, reactors, or dryers 30 in the system. For example, in the embodiment shown, process heat can be transferred to a recycling heating fluid such as a hot oil system configured to provide indirect heating to the decomposition reactor. In some embodiments, process heat can be used to heat a boiler configured to generate superheated steam for direct steam injection into the decomposition reactor. In some embodiments, a second recycling heating fluid, such as a second hot oil system, is configured to provide indirect heating to dryer 30 to remove water from the MgCl₂ containing starting material.

After heat has been removed from gas stream 2, gas stream 2 enters absorption reactor 10 configured to react the CO₂ with CaCl₂ and Mg(OH)₂ via the following overall reactions:

CaCl₂ + Mg(OH)₂ + CO₂ → CaCO₃ + MgCl₂+ H₂O (1)

Reactor 10 can be configured to receive CaCl₂ feed 3, gas stream 2, and a Mg(OH)₂ feed. In some embodiments, absorption reactor 10 is configured to operate at temperatures greater than 165 °C, such as between about 170 to 250 °C. In some embodiments, the operation temperature of reactor 10 can be at least 170, 175, 180, 185, 190, 195, 200, 210, 220, 230, or 240°C. In some embodiments, the operation temperature of reactor 10 is between 175 and 185 °C. To maintain a temperature above the operation temperature, reactor 10 can be configured similar to a distillation column, with a water reflux entering the top of the column and a heat input at the bottom of the column to maintain a bottom liquid product at the operation temperature, such as about 175 °C.

In some embodiments, the reactants can be preheated to the operation temperature prior to introducing into absorption reactor 10. For example, a calcium chloride feed 3 is preheated in heater 60 prior to being added to absorption reactor 10. In some embodiments, a water feed 4 may also be preheated in heater 61. As the reaction of CO₂ with hydroxide is exothermic, heat can be removed from reactor 10 to maintain operation temperature. In some embodiments, a circulating heating fluid loop (not shown) can be configured to transfer heat from reactor 10 to CaCl₂ feed 5, such as through heater 60. Similarly, a separate circulating heating fluid loop (not shown) can be configured to transfer heat from reactor 10 to water feed 4, such as through heater 61. By way of example, approximately 63 MMBtu/hr of process heat (such as from reactor 10) can be needed to heat 1,679 lb*mol/hr of CaCl₂*2H₂O solids from 25°C to 175°C and melt the solids at its melting point of 175°C, and to heat 1,679 lb*mol/hr of water from 25°C to 100°C, vaporize the water, and superheat the steam to 175°C.

Calcium chloride can be added to reactor 10 in one of three forms to absorption reactor 10: anhydrous CaCl₂, CaCl₂*2H₂O, or CaCl₂*4H₂O. In some embodiments, a molar ratio of water to CaCl₂ of about 3:1 or less can be added to the absorption column for every mole of CO₂ that is captured. In some embodiments, CaCl₂*2H₂O and water are fed to absorption reactor 10 to create an equivalent mixture of CaCl₂*3H₂O (67.2 wt% aqueous CaCl₂). In some embodiments, CaCl₂ feed 3 in dihydrate form can be converted from a solid phase to a liquid phase prior to entering reactor 10.

Reactor 10 is configured to comprise an outlet for aqueous slurry of CaCO₃ solids in aqueous MgCl₂ and an outlet for gas stream 2 that contains a reduced amount of CO₂ than that inputted into reactor 10. In some embodiments, gas stream 2 with the reduced CO₂ concentration exits absorption reactor 10 and can then pass through gas cooler 72 where heat can be further recovered before gas stream 2 is exhausted to the atmosphere or further processed downstream. The heat can be used to pre-heat the reactants, such as CaCl₂ and optionally water. As a result of the absorption column, the amount of CO₂ in gas stream 2 can be reduced by at least 30%, 40%, 50%, 60%, 70%, 80%, 90%, 95%, 98%, or 99%.

In some embodiments, at least 50 wt% aqueous MgCl₂ exits absorption reactor 10 and enters solid-liquid separator 20, which separates the CaCO₃ solids from the aqueous solution. In some embodiments, a weight percent of aqueous MgCl₂ between 50 to 60% exits absorption reactor 10 and enters solid-liquid separator 20, such as 51%, 53%, 55%, 57%, or 59% wt MgCl₂. In some embodiments, a ratio of water to MgCl₂ in the aqueous solution is less than about 5 to 1, about 4.5 to 1, or about 4 to 1. In some embodiments, a major portion of MgCl₂ in the aqueous solution is in the form of MgCl₂ tetrahydrate.

In some embodiments, water may be added to solid-liquid separator 20 to facilitate the separation of the carbonate solids. In such embodiments, the amount of water to be added can dilute the solution by less than 30%, 25%, 20%, 15%, 10%, or 5%. Once separated, in some embodiments, the hot CaCO₃ solids can be passed through a cooler 70 for energy recovery before being sent to storage.

After separating the carbonate solids from the aqueous MgCl₂, the aqueous solution is transferred to dryer 30 to remove water from the solution. In some embodiments, a sufficient amount of water is evaporated from the solution so that the ratio of water to MgCl₂ is less than about 3:1, about 2.5:1, or less than about 2 to 1. In some embodiments, a major portion of the water in the magnesium chloride-containing material exiting dryer 30 is in the form of MgCl₂ dihydrate. For example, the magnesium chloride containing material comprises at least 55%, 60%, 65% 70%, 75% 80%, 85% 90%, 95%, or 98% of MgCl₂*2H₂O (s). The primary reaction in dryer 30 is provided below:

MgCl₂*4H₂O (l) → MgCl₂*2H₂O (s) + 2 H₂O (g) (2)

In some embodiments, to supply the needed energy to remove a portion of the water, heat can be supplied to the vessel to keep the operation temperature at between 150 to 250°C, such as 160, 170, 180, 190, 200, 210, 220, 230, or 240°C. In some embodiments, the temperature can be kept between 195 and 205°C or 198 and 202°C. Dryer 30 is configured such that superheated steam (and potentially some HCl) exits the top of the vessel, while magnesium chloride containing material comprising dihydrate salts moves to first decomposition reactor 40. In some embodiments, operation pressures are at atmospheric pressure. In some embodiments, the superheated steam produced from dryer 30 can supply at least a portion of the steam required for decomposition reactors 40 and/or 45.

In some embodiments, the aqueous MgCl₂ solution is pumped through a heater 62 before entering dryer 30 to raise the temperature of the solution to substantially equal to the operation temperatures of dryer 30. In some embodiments, heat can be transferred to the solution at heater 62 by a circulating heating fluid loop 83 configured to transfer heat from gas stream 2 to the aqueous solution.

In some embodiments, system 100 comprises an evaporator 30 that is configured to reduce the water content so that MgCl₂ turns to solid and the solid material can be transferred to first decomposition reactor 40. For example, evaporator 30 can comprise a flash drum having a scraper or other agitator configured to facilitate conveyance to solid material. In some embodiments, in evaporator 30, a pressurized MgCl₂ solution at the operation temperature is flashed to atmospheric pressure to remove water from the aqueous solution and produce MgCl₂*2H₂O solids. In some embodiments, a portion of the heating fluid in circulating loop 83 may be directed to evaporator 30 to maintain the operation temperatures of evaporator 30.

In some embodiments, system 100 comprises a dryer 30 that is configured to reduce the water content so that aqueous MgCl₂ turns to solid and the solid material can be transferred to first decomposition reactor 40. Dryer 30 can be configured to apply indirect contact heating or direct contact heating using a medium such as air to maintain operation temperatures. For example, dryer 30 can be a rotary dryer, a flash dryer, or a spray dryer. In some embodiments, a portion of the heating fluid in circulating loop 83 may be directed to dryer 30 to maintain the operation temperatures of dryer 30 and may also be directed to blower to heat the drying medium such as air. Other embodiments, in lieu of dryer 30, system 100 can comprise a flaker, a crystallizer, or a priller configured to reduce the water content so that the molar ratio is about 2:1 and/or the MgCl₂ is mostly in a dihydrate form and can be transferred to first decomposition reactor 40.

By way of example, the heat input needed to raise the temperature of the aqueous solution to an operation temperature of 200°C is approximately 7 MMBtu/hr. Further, also by way of example, the heat input needed to reduce the water content of an aqueous solution where the molar ratio of water is 4:1 is approximately 71 MMBtu/hr. For circulating heating fluid loop 83, the fluid return temperature can be about 5 to 15°C above the operation temperature, e.g., 210°C, for the fluid leaving dryer 30 or heater 62. In addition, the fluid supply temperature (e.g., the temperature of the fluid approaching dryer 30 or heater 62) can be about 20 to 30°C above the operation temperature or 10 to 20°C above the return temperature, e.g., 225°C. At the intercept of loop 83 with gas stream 2, the temperature of gas stream 2 can be a temperature that is at least 30 to 40 above the operation temperature of decomposition reactor 40. In some embodiments, the temperature of gas stream 2 after transferring heat to loop 83 can be at least 235 °C.

System 100 comprises reactors configured for a two stage, counter-current flow decomposition reactor to convert MgCl₂ to Mg(OH)₂. Within the first stage, reactor 40 is configured for the following reaction to occur:

MgCl₂*2H₂O (s) → Mg(OH)Cl (s) + HCl (g) + H₂O (g) (3)

Within the second stage, reactor 45 is configured for the following reaction to occur:

Mg(OH)Cl (s) + H₂O (g) → Mg(OH)₂ (s) + HCl (g) (4)

In second reactor 45, steam can be counter-currently contacted with MgOHCl solids fed from first reactor 40. In some embodiments, steam can be generated by a boiler 90 that is heated by gas stream 2. Also, steam recycled from the exhaust of reactors 40 and 45 can be mixed with the steam from boiler 90 to feed reactor 45. Recycled steam may be heated by a heater 65 to obtain the desired final steam temperature to feed reactor 45. Steam is introduced into reactor 45 at a temperature that is substantially the same as the operation temperature of reactor 45 as described below. For example, steam can be introduced into reactor 45 at a temperature between 385°C and 395°C, such as about 390°C.

The Mg(OH)₂ solids exiting reactor 45 are in equilibrium with the vapor leaving reactor 45. In some embodiments, the exiting vapor leaving reactor 45 will comprise at least 0.8 mole of HCl for every mole of Mg(OH)₂ produced. For example, the exiting vapor leaving reactor 45 can comprise 0.85 mole of HCl, 0.9 mole of HCl, 0.95 mole of HCl, 0.98 mole HCl for ever mole of Mg(OH)₂ produced. The rate of counter-flow through reactor 45 is sufficient to keep the partial pressure of HCl low enough so that reaction (5) equilibrium is shifted to the right. In some embodiments, the counter flow is 100% superheated steam. In other embodiments, the counter flow comprises superheated steam and an inert carrier gas. In some embodiment, the partial pressure of HCl can be maintained at a sufficiently low amount by operating the decomposition reaction 45 under vacuum conditions.

In reactor 40, the vapor mixture of superheated steam and HCl leaving reactor 45 is counter-currently contacted with the magnesium chloride material fed from dryer or evaporator 30 comprising MgCl₂*2H₂O solids. In some embodiments, only a portion of the steam exiting reactor 45 is fed to reactor 40. For example, a majority of the vapor exiting reactor 45 can bypass reactor 40 so that additional heat can be recovered in the HCl condenser 76. In some embodiments, the Mg(OH)Cl solids exiting reactor 40 are in equilibrium with the vapor leaving reactor 40. In some embodiments, the exiting vapor leaving reactor 40 will comprise at least an additional 0.8 mole of HCl for every mole of MgOHCl produced. For example, the exiting vapor leaving reactor 40 can comprise an additional 0.85 mole of HCl, 0.9 mole of HCl, 0.95 mole of HCl, 0.98 mole HCl for ever mole of MgOHCl produced. The rate of counter-flow through reactor 40 is sufficient to keep the partial pressure of HCl low enough to maintain a shift of reaction (4) to the right.

The operation temperature for reactor 45 can be between 380°C and 500°C, such as about 390, 400, 410, 420, 430, 440, 450, 460, 470, or 490°C. In some embodiments, the operation temperature for reactor 45 is between about 385°C and 395°C, such as about 390°C. The operation temperature for reactor 40 can be between 250°C and 400°C, such as 260, 270, 280, 290, 300, 310, 320, 330, 340, 350, 360, 370, 380, or 390°C. In some embodiments, the operation temperature of reactor 40 is between about 275°C and 285°C, such as about 280°C. By way of example, the steam requirements for the two-stage counter-current configuration can be approximately 8.6 lb/hr of steam per lb/hr HCl at 390°C for second reactor 45 and 280°C for first reactor 40.

An output of reactor 40 comprises solid MgOHCl. In some embodiments, the solid phase output of reactor 40 is at least 55%, 60%, 65% 70%, 75% 80%, 85% 90%, 95%, 98%, or 99% of MgOHCl. An output of reactor 45 comprises solid Mg(OH)₂. In some embodiments, the solid phase output of reactor 45 is at least 55%, 60%, 65% 70%, 75% 80%, 85% 90%, 95%, 98%, or 99% of Mg(OH)₂.

In some embodiments, to maintain operation temperatures of reactors 40 and 45, heat can be supplied to the decomposition reactors 40, 45 indirectly through a circulating heating fluid loop to keep the decomposition reactor at the desired temperature. For example, heating fluid jackets about each reactor 40 and 45 can facilitate maintenance of the operation temperature. In the embodiment shown, circulating heating fluid loop 84 is configured to transfer heat from gas stream 2 to reactor 40 and circulating heating fluid loop 85 is configured to transfer heat from gas stream 2 to reactor 45.

In some embodiments, the MgCl₂ containing material exiting dryer 30 can be conveyed through a heater 64 before entering reactor 40 to raise the temperature of the solution to substantially equal to the operation temperatures of reactor 40. In some embodiments, while not shown in the one illustrated, a portion of the heating fluid in circulating loop 84 may be directed to heater 64 to heat the MgCl₂ containing material fed to reactor 40.

In some embodiments, for circulating heating fluid loop 85, the fluid return temperature (e.g., for the heating fluid leaving reactor 45 and heater 65) can be about 5 to 15°C above the operation temperature of reactor 40; e.g., the fluid return temperature can be about 400°C. In addition, the fluid supply temperature (e.g., the temperature of the fluid approaching reactor 45 and heater 65) can be about 10 to 45°C above the operation temperature or 5 to 25°C above the return temperature; e.g., the fluid supply temperature can be about 415°C. At the intercept of loop 85 with gas stream 2, the temperature of gas stream 2 can be greater than 500°C or greater than 600°C, e.g., the temperature of a flue gas exhaust stream. In some embodiments, the temperature of gas stream 2 after transferring heat to loop 85 can be at least 10°C higher than the temperature of the heating fluid approaching reactor 45.

In some embodiments, for circulating heating fluid loop 84, the fluid return temperature (e.g., the temperature of the heating fluid leaving reactor 40 or heater 64) can be about 5 to 15°C above the operation temperature of reactor 45; e.g., the fluid return temperature can be about 290°C. In addition, the fluid supply temperature (e.g., the temperature of the fluid approaching reactor 40 or heater 64) can be about 5 to 20°C above the operation temperature or 60 to 100°C above the return temperature; e.g., the fluid supply temperature can be about 355°C. At the intercept of loop 84 with gas stream 2, the temperature of gas stream 2 can be greater than 500°C or greater than 600°C, e.g., the temperature of a flue gas exhaust stream. In some embodiments, the temperature of gas stream 2 after transferring heat to loop 85 can be at least 10 degrees higher than the temperature of the heating fluid approaching reactor 40.

The hot Mg(OH)₂ solids exiting reactor 45 can be passed through a solids product cooler 74 before entering absorption reactor 10, while the vapor product exiting reactor 40 is combined with the vapor bypass 6 around reactor 40. The combined vapor stream passes through HCl condenser 76 before being pumped to an HCl product tank.

As evident from the operation temperatures of the decomposition reactor, there are significant enthalpy requirements for the decomposition reactor, namely, the reaction enthalpy for the decomposition of MgCl₂*2H₂O to Mg(OH)₂ and HCl and the superheated steam requirements for direct steam injection into the decomposition reactor. In some embodiments, system 100 can comprise a gas turbine or be configured to receive gas stream 2 produced from a gas turbine, such as a 60MW gas turbine 95 in the embodiment shown. In some embodiments, the overall CO₂ capture rate can be greater than 70%, 80%, 90%, 95%, or greater than 99%.

In addition to a first gas turbine, system 100 can comprise a furnace (not shown) to burn supplemental natural gas, and use heat recovered from the flue gas at the flame temperature to provide additional heat for steam generation within system 100. In some embodiments, for a two-stage counter-current reactor, the total enthalpy requirement for the process can be about 175 MMBtu/hr. The heat available from 60 MW turbine exhaust gas is about 146 MMBtu/hr, leaving an overall deficiency of about 29 MMBtu/hr that would be required to achieve 100% CO₂ capture. Burning 1.4 MMSCFD of supplemental natural gas in a furnace can provide heat recovery from the flue gas of 44.9 MMBtu/hr. In some embodiments, an additional 16-17 MMBtu/hr of enthalpy would be required within system 100 to capture this additional CO₂. This results in a net enthalpy surplus that could be used to achieve 100% CO₂ capture. If this 1.4 MMSCFD of natural gas were instead fired in a turbine, 5.6 MW of additional electricity could be produced (relative to the 60 MW of electricity produced in the existing turbine).

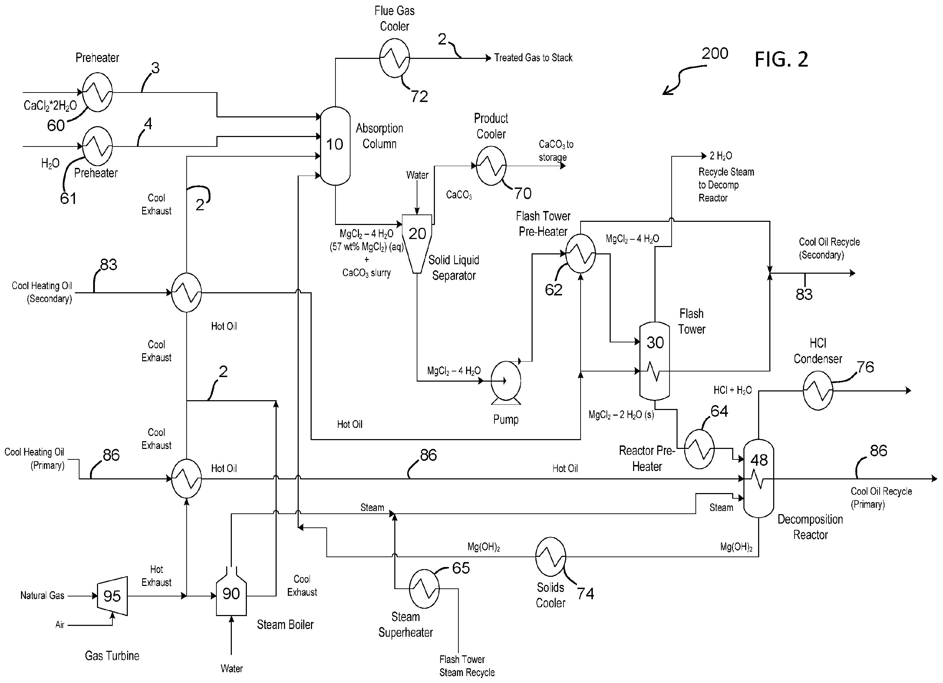

Referring now to **FIG. 2****,** shown therein and designated by the reference numeral 200 is a second embodiment of a system which does not fall under the scope of the present invention. The system is configured to remove CO₂ from a gaseous stream using Mg(OH)₂ and regenerate the Mg(OH)₂. Embodiment 200 is substantially similar to embodiment 100 described above, except that the decomposition process comprises only a single stage counter flow reactor 48 and circulating heating fluid loop 86 instead of loops 84 and 85. In some embodiments, the operation temperature of reactor 48 can be between 340°C -360°C, such as 350 °C. The superheated steam can be introduced at a temperature substantially the same as the operation temperature.

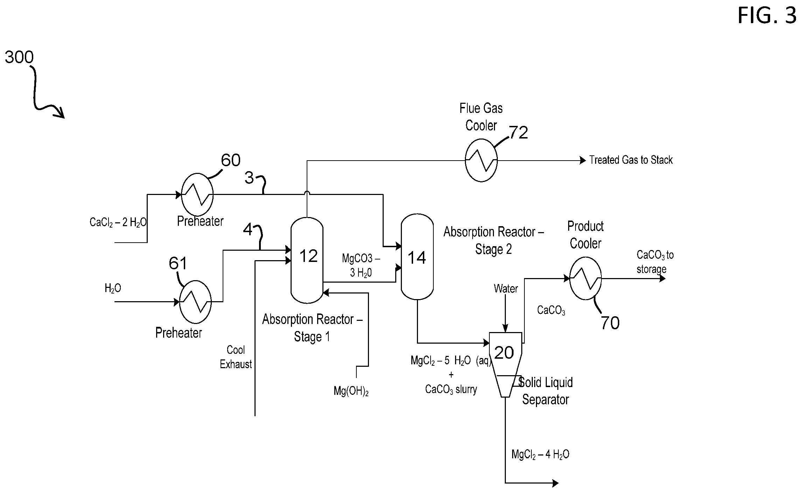

Referring now to **FIG. 3****,** shown therein and designated by reference numeral 300 is the process of the present invention as a two-stage CO₂ absorption process that can be substituted for the one stage absorption process described above in connection with reactor 10. The two-stage process is substantially similar to the conditions described for the one-stage process except that two reactors are used instead of one and a slightly higher molar ratio of water to MgCl₂ is required. Within the first stage, reactor 12 is configured for the following reaction to occur:

Mg(OH)₂ (s) + CO₂ (g) → MgCO₃ (aq) + H₂O (l) (5)

Within the second stage, reactor 14 is configured for the following reaction to occur:

CaCl₂ (aq) + MgCO₃ (aq) → CaCO₃ (s) + MgCl₂ (aq) (6)

In some embodiments, in reactor 12, the molar ratio of water to MgCO₃ can be about 3.5:1 or about 3:1. In some embodiments, in reactor 14, the molar ratio of water to MgCl₂ can be about 5.5:1 or about 5:1.

The above specification and examples provide a complete description of the structure and use of exemplary embodiments. Although certain embodiments have been described above with a certain degree of particularity, or with reference to one or more individual embodiments, those skilled in the art could make numerous alterations to the disclosed embodiments without departing from the scope of this invention. As such, the illustrative embodiments of the present systems and processes for removing carbon dioxide from a gaseous stream and regenerating magnesium hydroxide are not intended to be limiting. Rather, the present methods include all modifications and alternatives falling within the scope of the claims. For example, components may be combined as a unitary structure and/or connections may be substituted. Similarly, it will be understood that the benefits and advantages described above may relate to one embodiment or may relate to several embodiments.
The claims are not to be interpreted as including means-plus- or step-plus-function limitations, unless such a limitation is explicitly recited in a given claim using the phrase(s) "means for" or "step for," respectively.

## Claims

1. A method for producing magnesium hydroxide from magnesium chloride-containing material comprising:
reacting said magnesium chloride-containing material with a steam mixture in a first reactor at a temperature of 250 to 400 °C to form magnesium hydroxychloride and HCl;
reacting the magnesium hydroxychloride with steam in a second reactor to form magnesium hydroxide and HCl, wherein the magnesium chloride-containing material comprises a water to magnesium chloride molar ratio of about 2:1;
reacting the magnesium hydroxide with carbon dioxide in the first absorption reactor to form magnesium carbonate and water; and
reacting the magnesium carbonate with calcium chloride in the second absorption reactor to form calcium carbonate and magnesium chloride.

2. The method of claim 1, wherein a portion of a steam mixture exiting the second reactor is the steam mixture introduced into the first reactor.

3. The method of claim 1, wherein at least a portion of the HCl exits the second reactor in the steam mixture that then passes to the first reactor.

4. The method of claim 1, wherein the magnesium chloride-containing material substantially comprises magnesium chloride dihydrate.

5. The method of claim 1, wherein the first reactor is at a temperature of 250 to 350 °C.

6. The method of claim 1, wherein the second reactor is at a temperature of 300 to 500 °C.

7. The method of claim 1, wherein the steam introduced into the second reactor is at a temperature between 350 to 450 °C.

8. The method of claim 1, wherein no magnesium chloride is conveyed to the second reactor separate from that in product conveyed from the first reactor.

9. The method of claim 1, wherein a major portion of the magnesium chloride formed is in the form of magnesium chloride tetrahydrate.

10. The method of claim 1, wherein the first absorption reactor products are in a liquid phase and a solid phase, the liquid phase comprising at least 50% by weight of magnesium chloride.

11. The method of claim 1, wherein the second absorption reactor comprises a liquid phase comprising a molar ratio of water to magnesium chloride of less than 4.5:1.

12. The method of claim 1, further comprising separating at least a portion of the calcium carbonate formed in the second absorption reactor, and removing a portion of water from the liquid phase to provide a molar ratio of water to magnesium chloride of about 2:1.

## Patentansprüche

1. Verfahren zum Herstellen von Magnesiumhydroxid aus Magnesiumchlorid-haltigem Material, aufweisend:
Umsetzen des Magnesiumchlorid-haltigen Materials mit einem Wasserdampfgemisch in einem ersten Reaktor bei einer Temperatur von 250 bis 400 °C, um Magnesiumhydroxychlorid und HCl zu bilden;
Umsetzen des Magnesiumhydroxychlorids mit Wasserdampf in einem zweiten Reaktor, um Magnesiumhydroxid und HCl zu bilden, wobei das Magnesiumchlorid-haltige Material ein Wasser-zu-Magnesiumchlorid-Molverhältnis von etwa 2:1 aufweist;
Umsetzen des Magnesiumhydroxids mit Kohlenstoffdioxid in einem ersten Absorptionsreaktor, um Magnesiumcarbonat und Wasser zu bilden; und
Umsetzen des Magnesiumcarbonats mit Calciumchlorid in einem zweiten Absorptionsreaktor, um Calciumcarbonats und Magnesiumchlorid zu bilden.

2. Verfahren nach Anspruch 1, wobei ein Teil eines aus dem zweiten Reaktor austretenden Wasserdampfgemisches das in den ersten Reaktor eingeleitete Wasserdampfgemisch ist.

3. Verfahren nach Anspruch 1, wobei mindestens ein Teil des HCl den zweiten Reaktor in dem Wasserdampfgemisch verlässt, das anschließend zum ersten Reaktor geleitet wird.

4. Verfahren nach Anspruch 1, wobei das Magnesiumchlorid-haltige Material im Wesentlichen Magnesiumchlorid-Dihydrat aufweist.

5. Verfahren nach Anspruch 1, wobei der erste Reaktor eine Temperatur von 250 bis 350 °C aufweist.

6. Verfahren nach Anspruch 1, wobei der zweite Reaktor eine Temperatur von 300 bis 500 °C aufweist.

7. Verfahren nach Anspruch 1, wobei der in den zweiten Reaktor eingeleitete Wasserdampf eine Temperatur von 350 bis 450 °C aufweist.

8. Verfahren nach Anspruch 1, wobei kein Magnesiumchlorid getrennt von dem aus dem ersten Reaktor überführten Produkt in den zweiten Reaktor geleitet wird.

9. Verfahren nach Anspruch 1, wobei ein überwiegender Teil des gebildeten Magnesiumchlorid in Form von Magnesiumchlorid-Tetrahydrat vorliegt.

10. Verfahren nach Anspruch 1, wobei die Produkte des ersten Absorptionsreaktors in einer flüssigen Phase und einer festen Phase vorliegen, wobei die flüssige Phase mindestens 50 Gew.-% Magnesiumchlorid aufweist.

11. Verfahren nach Anspruch 1, wobei der zweite Absorptionsreaktor eine flüssige Phase aufweist, die ein Molverhältnis von Wasser zu Magnesiumchlorid von weniger als 4,5:1 aufweist.

12. Verfahren nach Anspruch 1, ferner aufweisend das Abtrennen mindestens eines Teils des im zweiten Absorptionsreaktor gebildeten Calciumcarbonats und das Entfernen eines Teils des Wassers aus der flüssigen Phase, um ein Molverhältnis von Wasser zu Magnesiumchlorid von etwa 2:1 bereitzustellen.

## Revendications

1. Procédé de production d'hydroxyde de magnésium à partir d'un matériau contenant du chlorure de magnésium, comprenant :
la réaction dudit matériau contenant chlorure de magnésium avec un mélange de vapeur d'eau dans un premier réacteur à une température de 250 à 400 °C pour former du chlorure d'hydroxyde de magnésium et du HCl ;
la réaction chlorure d'hydroxyde de magnésium avec de la vapeur d'eau dans un second réacteur pour former de l'hydroxyde de magnésium et du HCl, le matériau contenant chlorure de magnésium comprenant un rapport eau à chlorure de magnésium d'environ 2:1 ;
la réaction de l'hydroxyde de magnésium avec du dioxyde de carbone dans le premier réacteur d'absorption pour former du carbonate de magnésium et de l'eau ; et
la réaction du carbonate de magnésium avec du chlorure de calcium dans le second réacteur d'absorption pour former du carbonate de calcium et du chlorure de magnésium.

2. Procédé selon la revendication 1, dans lequel une portion du mélange de vapeur d'eau sortant du second réacteur constitue le mélange de vapeur d'eau introduit dans le premier réacteur.

3. Procédé selon la revendication 1, dans lequel au moins une portion du HCl sort du second réacteur dans le mélange de vapeur d'eau qui passe ensuite dans le premier réacteur.

4. Procédé selon la revendication 1, dans lequel le matériau contenant chlorure de magnésium comprend essentiellement du dihydrate de chlorure de magnésium.

5. Procédé selon la revendication 1, dans lequel le premier réacteur est à une température de 250 à 350 °C.

6. Procédé selon la revendication 1, dans lequel le second réacteur est à une température de 300 à 500 °C.

7. Procédé selon la revendication 1, dans lequel la vapeur d'eau introduite dans le second réacteur est à une température comprise entre 350 et 450 °C.

8. Procédé selon la revendication 1, dans lequel aucun chlorure de magnésium n'est acheminé vers le second réacteur séparément de celui contenu dans le produit transféré depuis le premier réacteur.

9. Procédé selon la revendication 1, dans lequel une portion majoritaire du chlorure de magnésium formé se présente sous forme de tétrahydrate de chlorure de magnésium.

10. Procédé selon la revendication 1, dans lequel les produits du premier réacteur d'absorption se trouvent dans une phase liquide et une phase solide, la phase liquide comprenant au moins 50 % en masse de chlorure de magnésium.

11. Procédé selon la revendication 1, dans lequel le second réacteur d'absorption comprend une phase liquide présentant un rapport eau à chlorure de magnésium inférieur à 4,5:1.

12. Procédé selon la revendication 1, comprenant de plus la séparation d'au moins une portion du carbonate de calcium formé dans le second réacteur d'absorption, et l'élimination d'une portion de l'eau de la phase liquide de sorte que le rapport eau à chlorure de magnésium est d'environ 2:1.
